Europäisches Patentamt

European Patent Office

Office européen des brevets

(19)

(11) EP 0 572 707 B1

(12) **EUROPÄISCHE PATENTSCHRIFT**

(45) Veröffentlichungstag und Bekanntmachung des Hinweises auf die Patenterteilung:
**20.03.1996 Patentblatt 1996/12**

(51) Int Cl.[6]: **F02D 21/08**, F02D 35/00, F02M 25/06

(21) Anmeldenummer: **92109583.2**

(22) Anmeldetag: **05.06.1992**

(54) **Verfahren zum Steuern einer mit einer Abgasrückführung arbeitenden Brennkraftmaschine**

Method of control of internal combustion engine with exhaust gas recirculation

Méthode de commande de moteur à combustion avec recirculation des gaz d'échappement

(84) Benannte Vertragsstaaten:
**DE FR GB IT**

(43) Veröffentlichungstag der Anmeldung:
**08.12.1993 Patentblatt 1993/49**

(73) Patentinhaber: **SIEMENS AKTIENGESELLSCHAFT**
**D-80333 München (DE)**

(72) Erfinder:
- **Miener, Björn, Dipl.-Ing.**
  **W-8400 Regensburg (DE)**
- **Gleissner, Markus, Dipl.-Ing. (FH)**
  **W-8400 Regensburg (DE)**

(56) Entgegenhaltungen:
DE-A- 3 217 287          GB-A- 2 036 863
US-A- 4 598 684          US-A- 4 694 812

- PATENT ABSTRACTS OF JAPAN vol. 9, no. 111 (M-379)(1834) 15. Mai 1985& JP-A-59 231 146 (MATSUSHITA DENKI SANGYO K.K.) 25. Dezember 1984
- PATENT ABSTRACTS OF JAPAN vol. 11, no. 54 (M-563)(2501) 19. Februar 1987 & JP-A-61 215 426 (ISUZU MOTORS LTD.) 25. September 1986

**Beschreibung**

Die Erfindung betrifft ein Verfahren zum Steuern einer mit einem Abgasrückführungssystem ausgestatteten Brennkraftmaschine gemäß Oberbegriff von Anspruch 1.

In der DE 32 17 287 C2 ist ein Auspuffgasrückführungs-Steuerungssystem beschrieben, bei dem die Brennkraftmaschine einen Auspuffgasrückführungskanal aufweist, der das Auspuffrohr mit dem Ansaugrohr verbindet und bei dem zum Öffnen und Schließen des Kanals ein Auspuffgasrückführungsventil (AGR-Ventil) mit einer steuerbaren Ventilöffnung vorgesehen ist. In einem Speicher sind eine Vielzahl von unterschiedlichen Ventilöffnungswerten des AGR-Ventils gespeichert, die wiederum Funkfionen der Betriebsbedingungen der Brennkraftmaschine sind. Ein im AGR-Ventil angeordneter Hubsensor erfaßt den aktuellen Wert der Ventilöffnung, anschließend wird dieser Wert mit dem gespeicherten Wert verglichen und das AGR-Ventil derart angesteuert, daß die Differenz von Soll- zu Ist-Wert minimiert wird.

Aus der US-A-4 598 684 ist eine Brennkraftmaschine bekannt, die mit einem Abgasrückführungssystem ausgestattet ist. Das dabei verwendete Abgasrückführungsventil weist einen Hubsensor auf, der ein lineares Ausgangssignal entsprechend der Lage des Ventils liefert. Die Menge des rückgeführten Abgases korrespondiert dabei mit dem Signal des Hubsensors und die Grundeinspritzzeit für die Einspritzventile wird bei aktiver Abgasrückführung mit einem Korrekturfakfor abhängig von der Drehzahl, dem Saugrohrdruck und dem Atmosphärendruck bewertet und führt zu gegenüber inaktiver Abgasrückführung zu verkürzten Einspritzzeiten.

Durch die Abgasrückführung erhalten die Zylinder der Brennkraftmaschine eine geringere Füllung mit Kraftstoff/Luft-Gemisch. Da die zurückgeführten Abgasbestandteile an der Verbrennung nicht mehr teilnehmen können, wird die Verbrennungstemperatur herabgesetzt, wodurch bei der Verbrennung wesentlich weniger Stickoxide entstehen. Der Gehalt der Abgase an CH-Verbindungen und an CO kann durch die Abgasrückführung nicht verringert werden. Die Abgasrückführungsrate muß sogar möglichst genau dosiert werden, d.h. der Öffnungsquerschnitt des Ventils genau eingestellt werden, da sonst ein Anstieg der CH- und CO-Anteile im Abgas erfolgen kann.

Bei üblichen Kraftstoff-Einspritzsystemen für Brennkraftmaschinen wird eine Grundeinspritzmenge (Grundeinspritzzeit) aus einem Kennfeld abhängig von Last und Drehzahl der Brennkraftmaschine ermittelt. Für die Lastermittlung wird bei saugrohrdruckgeführter Einspritzung das Signal eines Unterdrucksensors im Ansaugrohr herangezogen. Da der Saugrohrdruck als Maß für die zu wählende Einspritzzeit nicht nur durch die angesaugte Frischluftmasse, sondern auch von der Menge des rückgeführten Abgases bestimmt wird, muß die Grundeinspritzzeit abhängig von der Abgasrückführungsrate korrigiert werden.

Der vorliegenden Erfindung liegt deshalb die Aufgabe zugrunde, ein Verfahren zur Steuerung einer Brennkraftmaschine mit einem Abgasrückführungssystem der eingangs genannten Art anzugeben, das abhängig von der Abgasrückführrate auf einfache Weise eine Korrektur der Einspritzzeit für die Einspritzventile ermöglicht, so daß für jeden Betriebspunkt der Brennkraftmaschine, in der die Abgasrückführung aktiv ist, die für eine optimale Verbrennung benötigte Kraftstoffmenge zugemessen wird.

Diese Aufgabe wird gemäß den Merkmalen des Patentanspruches 1 gelöst. Vorteilhafte Weiterbildungen der Erfindung finden sich in den Unteransprüchen.

Die Erfindung wird anhand der Figuren näher erläutert. Dabei zeigen

Figur 1 ein vereinfachtes Blockschaltbild einer Brennkraftmaschine mit einer Abgasrückführung zur Durchführung des erfindungsgemäßen Verfahrens,

Figur 2 und 3 Flußdiagramme für die Ermittlung einer die Abgasrückführung berücksichtigenden Einspritzzeit.

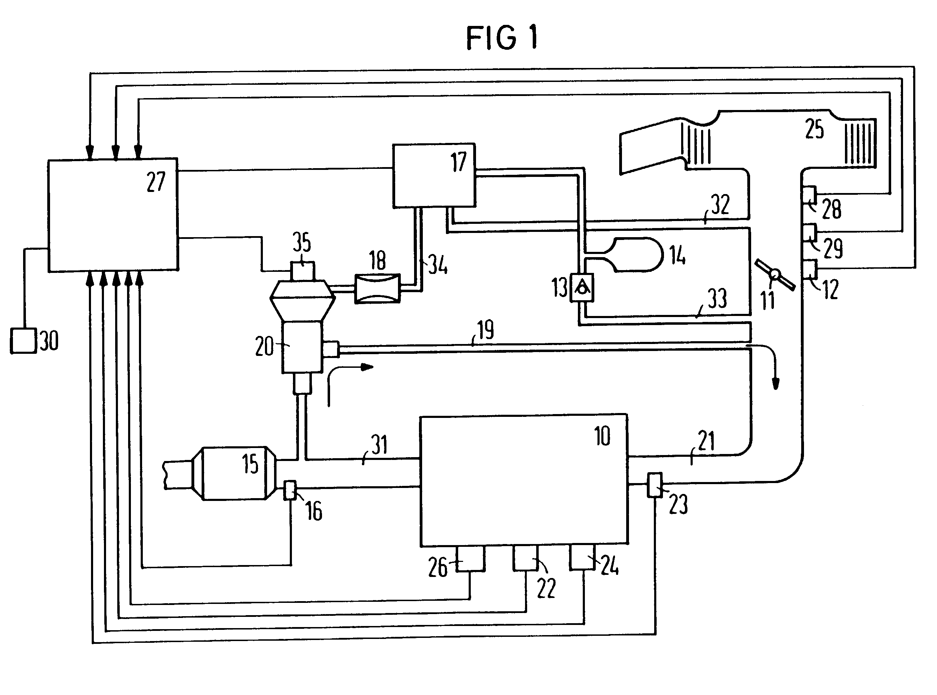

In Figur 1 ist mit 10 eine Brennkraftmaschine bezeichnet, die ein Ansaugrohr 21 und ein Abgas- oder Auspuffrohr 31 aufweist. Die zur Verbrennung notwendige Frischluft strömt über ein Luftfilter 25 an einer Drosselklappe 11 vorbei in die nicht dargestellten Zylinder der Brennkraftmaschine 10. Ein Drosselklappenschalter 12 erfaßt die Stellung (Volllast- oder Leerlaufstellung) der Drosselklappe 11 und ist ausgangsseitig an einen Signaleingang einer elektronischen Steuerungseinrichtung 27 angeschlossen. Zur Erfassung der Temperatur der Frischluft bzw. des Unterdruckes im Ansaugrohr sind Sensoren 28 und 29 stromaufwärts der Drosselklappe 11 im Ansaugrohr 21 angeordnet. Die Ausgangssignale dieser beiden Sensoren 28,29 werden ebenfalls der elektronischen Steuerungseinrichtung 27 zugeführt. In das Auspuffrohr 31 ist ein Drei-Wege-Katalysator 15 zum Konvertieren der im Abgas enthaltenen Bestandteile HC, CO und $NO_x$ geschaltet. An einer Stelle stromaufwärts vom Katalysator ist ein Abgassensor 16 in Form einer λ-Sonde zum Erfassen der Sauerstoffkonzentration im Abgas vorgesehen. Dem elekfronischen Steuergerät 27 werden weitere Eingangsgrößen von einem Kurbelwinkel-Geber 26, einem Drehzahlsensor 22, einem Kühlmitteltemperatursensor 24 und einem Sensor 30 für den Atmosphärendruck zugeführt.

Ein in dem elektronischen Steuergerät 27 enthaltener Mikrocomputer ermittelt abhängig von Last und Drehzahl der Brennkraftmaschine eine Grundeinspritzzeit entsprechend einer Grundeinspritzmenge an Kraftstoff, die über die Einspritzventile 23 zugemessen wird. Für die Lastermittlung wird dazu bei der vorliegenden saugrohrdruckgeführten Einspritzung das Ausgangssignal des Drucksensors 29 im Ansaugrohr 21 herangezogen.

Zum Rückführen eines Teils des Abgases in der mit Pfeilsymbolen eingezeichneten Richtung ist eine Abgas-Rückführleitung 19 vorgesehen, die das Abgasrohr 31 mit dem Ansaugrohr 21 derart verbindet, daß Abgas vor dem Katalysator 15 und der λ-Sonde 16 abgezweigt wird und stromabwärts der Drosselklappe 11 wieder in das Ansaugrohr 21 zurückgeführt wird. In die Abgas-Rückführleitung 19 ist ein pneumatisches Abgasrückführventil (AGR-Ventil) 20 eingeschaltet, das je nach Ansteuerung einen mehr oder weniger großen Querschnitt von der Abgasrückführungsleitung 19 zum Ansaugrohr 21 freigibt. Zur Ansteuerung des AGR-Ventils 20 dient ein elektropneumatisches Stellglied (Steuerventil) 17, das eingangsseitig sowohl über eine Leitung 32 stromaufwärts der Drosselklappe 11 mit dem Ansaugrohr 21 als auch über eine Leitung 33 stromabwärts der Drosselklappe 11 mit dem Ansaugrohr 21 verbunden ist, wobei in diese Leitung 33 ein Rückschlagventil 13 mit Druckspeicher 14 eingefügt ist. Ausgangsseitig ist das Steuerventil 17 über eine Leitung 34 mit dem AGR-Ventil 20 verbunden. Um eventuell auftretende Druckschwankungen zu vermeiden, ist in diese Leitung 34 eine Drossel 18 eingefügt. Zur elekfrischen Ansteuerung des Steuerventils 17 ist es über eine nicht näher bezeichnete Signalleitung mit der elektronischen Steuerungseinrichtung 27 verbunden. Zum Ermitteln des Öffnungsquerschnittes des AGR-Ventils 20 in der Abgasrückführungsleitung 19 ist in dem AGR-Ventil ein Hubsensor 35 angeordnet, der den Kolbenhub des Ventils 20 z.B. durch einen Potentiometerabgriff erfaßt und als Lagerückmeldung eine dem Ventilhub proportionale Spannung der elektronischen Steuerungseinrichtung 27 zuführt.

Die Gesamteinspritzeit $t_i$ für die Einspritzventile 23 setzt sich zusammen aus einer Grundeinspritzzeit (Basiseinspritzzeit) $t_{iB}$, die aus einem über Saugrohrdruck p und Motordrehzahl n aufgespannten Kennfeld betriebspunkfabhängig ausgelesen wird und einer Reihe von Korrekturfaktoren, durch welche diese Grundeinspritzzeit $t_{iB}$ unterschiedlichsten Betriebsbedingungen angepaßt wird. Neben Korrekturfakforen, die zum Beispiel eine Startanreicherung, Warmlaufphase, Beschleunigungsanreicherung und Schubreduzierung berücksichtigen, muß bei Brennkraftmaschinen mit Abgasrückführungssystemen die Menge des rückgeführten Abgases bei der Kraftstoffzumessung in Betracht gezogen werden. In der für die Berechnung der Gesamteinspritzzeit $t_i$ maßgebenden Formel

$$t_i = t_{iB} \times \ldots \times (1 + \ldots + t_{iEGR}) \qquad (1)$$

wird daher der Einfluß der Abgasrückführung mit dem Korrekturfaktor $t_{iEGR}$ berücksichtigt. Die weiteren, oben erwähnten Korrekturfaktoren sind aus Gründen der Übersichtlichkeit in der Formel (1) weggelassen. Am Eingang des Stellgliedes 17 für das Abgasrückführventil 20 liegt der Saugrohrdruck p und dieses Stellglied schaltet durch entsprechende elektrische Ansteuerung zwischen Umgebungsdruck und Saugrohrdruck hin und her. Am Ausgang des Stellgliedes ergibt sich dann ein resultierender Druck (Steuerdruck), der sich als eine Funktion des Saugrohrdruckes p und des Tastverhältnisses TV darstellt, mit dem das Stellglied angesteuert wird. Das Tastverhältnis TV setzt sich wiederum zusammen aus einem Grundtastverhältnis TVG und zweier Korrekturfaktoren F1, F2, die den Warmlauf der Brennkraftmaschine bzw. die absolute Höhe und damit den Luftdruck (Luftdichte, Lufttemperatur) berücksichtigt. Die Werte für das Grundtastverhältnis TVG sind in einem Kennfeld der elektronischen Steuerungseinrichtung abhängig vom Saugrohrdruck p und Drehzahl n der Maschine, der Faktor F1 für die Warmlaufphase in einer Tabelle abhängig von der Kühlmitteltemperatur TKW und der Fakfor F2 für die Höhenkorrektur in einer Tabelle abhängig von der absoluten Höhe abgelegt. Für das Tastverhältnis ergibt sich somit folgende Beziehung

$$TV = TVG \times F1 \times F2 \qquad (2)$$

so daß über die Temperatur des Kühlmittels das Grundtastverhältnis TVG über den Fakfor $0 < F1 < 1$ und in Abhängigkeit der berechneten Höhe (z.B. aus dem Saugrohrdruck p) über den Faktor $0 < F2 < 1$ gewichtet werden kann. Ist einer der beiden Faktoren 0, wird das Tastverhältnis zu 0 und es findet keine Abgasrückführung statt (entspricht 0% Tastverhältnis); sind beide Faktoren 1, so wirkt die volle Abgasrückführung die man haben will (entspricht 100% Tastverhältnis).

Die durch Ansteuern des Stellgliedes 17 bewirkte Bewegung des Kolbens im Abgasrückführventil 20 wird mittels des ihm zugeordneten Hubsensors 35 erfaßt und als Ist-Wert $Hub_{Ist}$ der Kolbenstellung als elektrisches Spannungssignal der elektronischen Steuerungseinrichtung 27 zugeführt. In einem Speicher der elektronischen Steuerungseinrichtung sind für das Grundtastverhältnis Sollwerte $Hub_{Soll}$ in einem Kennfeld gespeichert, das über der Drehzahl n der Brennkraftmaschine und dem Saugrohrdruck p aufgespannt ist. Das Verhältnis von Istwert $HUB_{IST}$ zu dem im Kennfeld gespeicherten Sollwert $HUB_{SOLL}$ definiert einen Hubfakfor $HUB_{FAK}$. Dieser Hubfaktor ist ebenfalls in einem Kennfeld abgelegt und bestimmt einen Hubkorrekturfaktor. Die Werte für den Hubkorrekturfaktor liegen analog den Werten für den Warmlauffaktor und Höhenkorrekfurfakfor zwischen 0 und 1.

Da die Druckdifferenz $\Delta_p$ zwischen Saugrohrdruck p im Ansaugrohr 21 und Abgasgegendruck PA vor dem Katalysator 15 ein Maß für die rückgeführte Abgasmasse durch das Abgasrückführungsventil darstellt, ist in einem weiteren Kennfeld abhängig von der Drehzahl n der Brennkraftmaschine und dieser Druckdifferenz $\Delta p$ ein Korrekturfaktor $t_{iEGR}$, auch als Vorsteuerwert für die Einspritzzeit $t_i$ bei Abgasrückführung bezeichnet, abgelegt. Der Korrekturfaktor $t_{iEGR}$ gibt an, welchen maximalen Einfluß die Abgasrückführung auf die gesamte Einspritzzeit $t_i$ und damit auf die Gemischzusammensetzung bei $Hub_{Soll}$ des Abgasrückführungsventils haben kann. Um Abweichungen der Kolbenstellung des Abgasrückführventils vom $\text{Hub}_{Soll}$ zu berücksichtigen, wird dieser Vorsteuerwert $t_{iEGR}$ mit dem Hubkorrekturfaktor $\text{KOR}_{FAK}$ gewichtet.

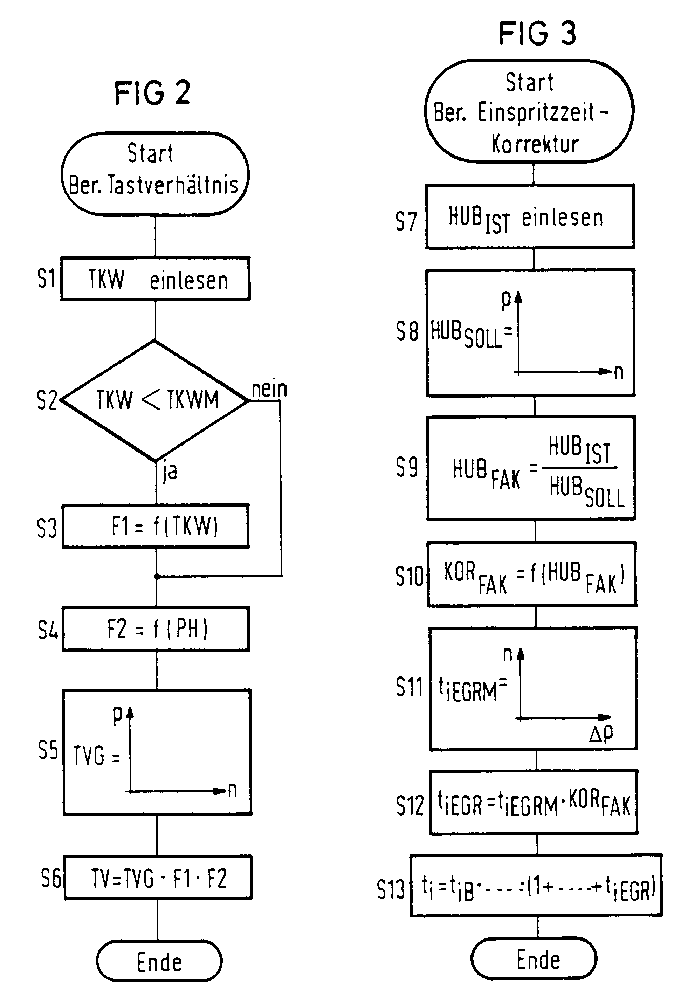

Die Durchführung dieses Korrekturverfahrens ist anhand der beiden Flußdiagramme (Figur 2 und 3) dargestellt.

Zur Bestimmung des Tastverhältnisses TV wird in einem ersten Schritt S1 die Kühlmitteltemperatur TKW der Brennkraftmaschine in einen Arbeitsspeicher des Mikrocomputers eingelesen. Im Schritt S2 wird dann verglichen, ob diese Temperatur unterhalb einem vorgegebenen Maximalwert für den Warmlauf TKWM liegt. Ist dies der Fall, so wird in einem Schritt S3 aus einem Kennfeld oder einer Tabelle der Faktor F1 als Funktion der eingelesenen Kühlmitteltemperatur TKW ermittelt. In einem weiteren Schritt S4 wird ein Faktor F2 als Funkfion von der absoluten Höhe PH aus einem Kennfeld oder einer Tabelle eingelesen. Im Schritt S5 wird ein Grundtastverhältnis TVG aus einem Kennfeld des Arbeitsspeichers, das über der Drehzahl n und dem Saugrohrdruck p aufgespannt ist, eingelesen. Damit ergibt sich im Schritt S6 durch Verknüpfung der einzelnen faktoren ein Gesamttastverhältnis TV = TVG x F1 x F2.

Ist die Abfrage im Schritt S2 negativ, d.h. die ermittelte Kühlmitteltemperatur TKW ist größer als der Grenzwert TKWM, so wird der Schritt S3 übersprungen. Dies entspricht einem Faktor F1 = 1, d.h. die Warmlaufphase der Brennkraftmaschine ist abgeschlossen und eine volle Abgasrückführung ist möglich.

In einem Schritt S7 wird die Kolbenstellung des Abgasrückführventils 20 abgefragt und dieser Wert als $\text{Hub}_{Ist}$ gespeichert. Anschließend wird im Schritt S8 der Wert für einen Sollhub $\text{HUB}_{SOLL}$ aus einem Kennfeld abhängig vom Saugrohrdruck p und der Drehzahl n der Brennkraftmaschine eingelesen und im nächsten Schritt (S9) durch Quotientenbildung ein Hubfakfor gebildet, der den Hubeinfluß des Abgasrückführungssystems kennzeichnet. Aus einer Tabelle wird beim Schritt S10 abhängig von diesem Hubfakfor ein Hubkorrekturfaktor eingelesen. Dadurch wird eine Linearisierung der Abgasrückführungsrate über den Ventilhub erreicht. Aus einem Kennfeld, das über der Drehzahl n und der Druckdifferenz $\Delta_p$ zwischen Saugrohrdruck und Abgasgegendruck aufgespannt ist, wird im schritt S11 ein Wert für die Einspritzzeit $t_{iEGRM}$ eingelesen, der den Maximaleinfluß der Abgasrückführung kennzeichnet. Im Schritt S12 schließlich wird dieser Wert mit dem Korrekturfaktor aus Schritt S10 multipliziert und man erhält einen Vorsteuerwert $t_{iEGR}$ für die Einspritzzeit bei Brennkraftmaschinen mit Abgasrückführung. Die Grundeinspritzzeit $t_i$ schließlich ist dann das Produkt aus der Grundeinspritzzeit $t_{iB}$ korrigiert mit dem Vorsteuerwert $t_{iEGR}$ und weiteren Korrekfurfaktoren, die bereits eingangs erwähnt wurden.

Mit diesem Verfahren wird es auf relativ einfache Weise ermöglicht, in jedem Betriebspunkt der Brennkraftmaschine die optimale Abgasrückführmenge einzustellen und die zur Verbrennung nötige Menge an Kraftstoff einzuspritzen.

## Patentansprüche

1. Verfahren zum Steuern einer mit einer Abgasrückführung arbeitenden, ein saugrohrdruckgeführtes Einspritzsystem aufweisenden Brennkraftmaschine (10), mit einem Abgasrückführ-Ventil (20), das in einem von dem Auspuffrohr (31) abzweigenden und stromabwärts der Drosselklappe (11) in das Ansaugrohr (21) mündenden Rückführkanal (19) angeordnet ist und dessen Öffnungsgrad zur Steuerung der Abgasrückführrate mit Hilfe eines Stellgliedes (17) beeinflußbar ist, wobei der Öffnungsgrad ($\text{HUB}_{IST}$) des Abgasrückführventils (20) über dessen Ventilhub mittels eines Hubsensors (35) erfaßt wird und zur Einstellung einer optimalen Abgasrückführungsrate mit einem last- und drehzahlabhängigen Sollwert ($\text{HUB}_{SOLL}$) verglichen wird und zur Berechnung der Einspritzzeit ($t_i$) für die Einspritzventile (23) die Abgasrückführrate derart berücksichtigt wird, daß die Einspritzzeit ($t_i$) reduziert wird, **dadurch gekennzeichnet**, daß

   die Einspritzzeit ($t_i$) mittels eines von der Drehzahl (n) und der Druckdifferenz ($\Delta p$) zwischen dem Saugrohrdruck im Ansaugrohr (21) und dem Abgasgegendruck im Auspuffrohr (31) abhängigen Vorsteuerwert ($t_{iEGRM}$) korrigiert wird und dieser Vorsteuerwert mit einem aus dem verhältnis des Öffnungsgrads ($\text{HUB}_{IST}$) und des vorgegebenen Sollwerts ($\text{HUB}_{SOLL}$) des Abgasrückführventils (20) gebildeten, den Hubeinfluß berücksichtigenden Hubfaktor ($\text{HUB}_{FAK}$) gewichtet wird.

2. Verfahren nach Anspruch 1, dadurch gekennnzeichnet, daß zu jedem Hubfakfor ($\text{HUB}_{FAK}$) ein dazugehöriger Hubkorrekturfaktor ($\text{KOR}_{FAK}$) gebildet wird, der die Nichtlinearität der Abgasrückführmenge über den Ventilhub berücksichtigt.

3. Verfahren nach Anspruch 1, dadurch gekennzeichnet, daß das Stellglied (17) als elekfropneumatisches Ventil ausgebildet ist und mit einem vom Lastzustand (n,p) der Brennkraftmaschine (10) abhängigen Tastverhältnis (TV) angesteuert wird und das Stellglied (17) eingangsseitig mit dem Saugrohrdruck beaufschlagt ist und das über einen, vom Tastverhältnis (TV) und dem Saugrohrdruck abhängigen Steuerdruck auf das Abgasrückführventil (20) einwirkt.

4. Verfahren nach Anspruch 3, dadurch gekennzeichnet, daß sich das Tastverhältnis (TV) für das Stellglied (17) zusammensetzt aus einem von der Drehzahl (n) und dem Saugrohrdruck (p) abhängigen Grundtastverhältnis (TVG), einer Warmlauframpe (F1) und aus einer Höhenkorrektur (F2).

5. Verfahren nach Anspruch 4,
dadurch gekennnzeichnet, daß die Werte für das Grundtastverhälnis (TVG), Warmlauframpe (F1), Höhenkorrektur (F2), Sollwert ($HUB_{SOLL}$), Vorsteuerwert ($t_{iEGRM}$) und Korrekturfaktor ($KOR_{FAK}$) in Kennfeldern einer elektronischen Steuerungseinrichtung der Brennkraftmaschine (10) abgelegt sind.

## Claims

1. Method of controlling an internal combustion engine (10) which operates with an exhaust gas recirculation and has an injection system controlled by intake manifold pressure, with an exhaust gas recirculation valve (20) which is arranged in a recirculation channel (19) which branches off from the exhaust pipe (31) and opens into the intake manifold (21) downstream of the throttle valve (11) and whose degree of opening can be influenced in order to control the exhaust gas recirculation rate using a final controlling element (17), the degree of opening ($HUB_{IST}$) of the exhaust gas recirculation valve (20) over its valve travel being detected by means of a travel sensor (35), being compared with a load-dependent and rotational speed-dependent desired value ($HUB_{SOLL}$) in order to set an optimum exhaust gas recirculation rate, and, in order to calculate the injection time ($t_i$) for the injection valve (23) the exhaust gas recirculation rate being taken into account, such that the injection time ($t_i$) is reduced, characterized in that the injection time ($t_i$) is corrected by means of a pilot control value ($t_{iEGRM)}$ which is dependent on the rotational speed (n) and the difference in pressure ($\Delta p$) between the intake manifold pressure in the intake manifold (21) and the exhaust gas recirculation counter pressure in the exhaust pipe (31), and this pilot control value being weighted with a travel factor ($HUB_{FAK}$) which is formed from the ratio of the degree of opening ($HUB_{iST}$) and the prescribed desired value ($HUB_{SOLL}$) of the exhaust gas recirculation valve (20) and takes into account the influence of the travel.

2. Method according to Claim 1, characterized in that an associated travel correction factor ($KOR_{FAK}$), which takes into the account the non-linearity of the amount of recirculated exhaust gas over the valve travel, is formed for each travel factor ($HUB_{FAK}$).

3. Method according to Claim 1, characterized in that the final controlling element (17) is constructed as an electropneumatic valve and is actuated with a pulse duty factor (TV) which is dependent on the load state (n,p) of the internal combustion engine (10) and the final controlling element (17) is acted on on the input side by the intake manifold pressure and via a control pressure, dependent on the pulse duty factor (TV) and the intake manifold pressure, acts on the exhaust gas recirculation valve (20).

4. Method according to Claim 3, characterized in that the pulse duty factor (TV) for the final controlling element (17) is composed of a basic pulse duty factor (TVG) dependent on the rotational speed (n) and the intake manifold pressure (p), a warming-up slope (F1) and an altitude correction (F2).

5. Method according to Claim 4, characterized in that the values for the basic pulse duty factor (TVG), warming-up slope (F1), altitude correction (F2), desired value ($HUB_{SOLL}$), pilot control value ($t_{iEGRM}$) and corrector factor ($KOR_{FAK}$) are stored in characteristic diagrams of an electronic control device of the internal combustion engine (10).

## Revendications

1. Procédé de commande d'un moteur à combustion interne (10) fonctionnant avec recyclage des gaz d'échappement, présentant un système d'injection piloté par la pression au tube d'admission, et comportant une soupape de recyclage des gaz d'échappement (20), disposée dans un canal (19) de recyclage partant du tube d'échappement (31) et débouchant dans le tube d'admission (21) en aval du papillon (11) des gaz d'échappement, et dont le degré d'ouverture ($HUB_{IST}$) permettant de commander la quantité de gaz d'échappement recyclés peut être influencé au moyen d'un organe de réglage (17), le degré d'ouverture ($HUB_{IST}$) de la soupape de recyclage des gaz d'échappement (20) étant mesuré par la course de cette soupape au moyen d'un détecteur de course (35) et, pour régler une proportion optimale des gaz d'échappement recyclés, est comparé à une valeur de consigne ($HUB_{SOLL}$), fonction de la charge et de la vitesse de rotation, et que, pour calculer la durée d'injection ($t_i$) pour les soupapes d'injection (23), la proportion de gaz d'échappement recyclés est prise en compte de façon à réduire la durée d'injection ($t_i$),

caractérisé en ce que
la durée d'injection ($t_i$) est corrigée, au moyen d'une valeur de pré-commande ($t_{iERGM}$) dépendant de la vitesse de rotation (n) et de la différence de pression ($\Delta p$) entre la pression au tube d'admission (21) et la pression au tube d'échappement (31), et cette valeur de pré-commande est pondérée par un facteur de course ($HUB_{FAK}$) prenant en compte la course de levée et formé à partir du quotient du degré d'ouverture (HUB$_{IST}$) par une valeur de consigne prédéfinie (HUB$_{SOLL}$) de la soupape de recyclage des gaz d'échappement (20).

2. Procédé suivant la revendication 1, caractérisé en ce que, pour chaque facteur de course (HUB$_{FAK}$), est formé un facteur de correction de la course (KOR$_{FAK}$) qui prend en compte la non-proportionnalité de la quantité de gaz d'échappement recyclés par rapport à la course de levée de la soupape.

3. Procédé suivant la revendication 1, caractérisé en ce que l'organe de réglage (17) est réalisé sous la forme d'une soupape électropneumatique et est commandé avec un rapport cyclique (TV) dépendant de l'état de charge (n, p) du moteur à combustion interne (10), et en ce que, sur l'organe de réglage (17), est appliquée, coté entrée, la pression au tube d'admission, cet organe de réglage (17) agissant sur la soupape de recyclage des gaz d'échappement (20) au moyen d'une pression de commande dépendant du rapport cyclique (TV) et de la pression au tube d'admission.

4. Procédé suivant la revendication 3, caractérisé en ce que le rapport cyclique (TV) pour l'organe de réglage (17) résulte de la combinaison d'un rapport cyclique de base (TVG), dépendant de la vitesse de rotation (n) et de la pression (p) au tube d'admission, d'une pente de montée en température (F1) et d'une correction d'altitude (F2).

5. Procédé suivant la revendication 4, caractérisé en ce que les valeurs du rapport cyclique de base (TVG), de la pente de montée en température (F1), de la correction d'altitude (F2), de la valeur de consigne (HUB$_{SOLL}$), de la valeur de pré-commande (t$_{iERGM}$) et du facteur de correction de la course (KOR$_{FAK}$) sont mis en mémoire dans des faisceaux de caractéristiques d'un dispositif de commande électronique du moteur à combustion interne (10).

# FIG 1

EP 0 572 707 B1

## FIG 2

Start
Ber. Tastverhältnis

S1 | TKW einlesen

S2 | TKW < TKWM — nein

ja

S3 | F1 = f(TKW)

S4 | F2 = f(PH)

S5 | TVG = $\begin{array}{c} p\uparrow \\ \phantom{xx} \\ \xrightarrow{\phantom{xx}} n \end{array}$

S6 | TV = TVG · F1 · F2

Ende

## FIG 3

Start
Ber. Einspritzzeit-
Korrektur

S7 | $HUB_{IST}$ einlesen

S8 | $HUB_{SOLL}$ = $\begin{array}{c} p\uparrow \\ \phantom{xx} \\ \xrightarrow{\phantom{xx}} n \end{array}$

S9 | $HUB_{FAK} = \dfrac{HUB_{IST}}{HUB_{SOLL}}$

S10 | $KOR_{FAK} = f(HUB_{FAK})$

S11 | $t_{iEGRM} = \begin{array}{c} n\uparrow \\ \phantom{xx} \\ \xrightarrow{\phantom{xx}} \Delta p \end{array}$

S12 | $t_{iEGR} = t_{iEGRM} \cdot KOR_{FAK}$

S13 | $t_i = t_{iB} \cdot \ldots \cdot (1 + \ldots + t_{iEGR})$

Ende